# EUROPEAN PATENT APPLICATION

(11) **EP 0 982 883 A2**
(43) Date of publication of application: **01.03.2000**
(21) Application number: 99306521.8
(22) Date of filing: 18.08.1999
(51) Int. Cl.: H04B 10/18, H04B 10/135

(54) **Optical transmitter and optical transmission system**

(30) Priority: 21.08.1998 JP 23564198
(71) Applicant: NEC Corporation, Minato-ku, Tokyo 108-8001 (JP)
(72) Inventor: Ito, Toshiharu, Minato-ku, Tokyo 108-01 (JP)
(74) Representative: Abnett, Richard Charles

(57) **Abstract**

Light which has been emitted from a light source (101) is inputted to an intensity modulator (102). A light signal which has been intensity-modulated in accordance with a transmission signal is then inputted to a polarization modulator (1). The polarization modulator modulates the polarization of the signal light. Light output from the polarization modulator is inputted to a birefringence device (2; 5; 7,8; 201). The birefringence device is arranged in such a way that the slow axis and rapid axis thereof are aligned with the rapid axis and the slow axis of the polarization modulator, respectively, so as to reduce the polarization dependency.

## Description

### BACKGROUND OF THE INVENTION

### 1. Field of the Invention

The present invention relates in general to an optical transmitter and an optical transmission system each of which subjects an optical signal to either polarization modulation or polarization scrambling, and more particularly to an optical transmitter and an optical transmission system each of which is capable of suppressing the polarization dispersion of the polarization modulator.

### 2. Description of the Related Art

The appearance of optical fiber amplifiers has enabled, even in transmission distances over several thousands of kilometers, signals to be transmitted without carrying out electrical reproduction and repetition in repeaters. As one of the main causes of degrading the transmission characteristics in such a long distance optical transmission system, there is the polarization dependency effect in the transmission path. By the polarization dependency effect is meant that the influence which is exerted on the optical signal, when the optical signal is passing through the transmission system differs, depending on the polarization state of the optical signal. The polarization dependency effect contains therein the polarization dispersion, the polarization dependency loss, the polarization hole burning in the repeating amplifier, and the like. Now, the description will hereinafter be given with respect to the influences which are exerted on the transmission characteristics by the polarization dispersion and the polarization dependency loss, out of these effects.

First of all, the polarization dispersion will hereinbelow be described. In general, a polarization modulator has a birefringence, and in particular, a lithium niobate (LN) waveguide has a relatively large birefringence. By birefringence is meant the property in which the propagation speed of light differs between two polarization axes. The polarization dispersion is the delay difference which occurs between the light beams passing through the two polarization axes, respectively, due to the presence of the birefringence.

Next, the polarization dependency loss will hereinbelow be described. The polarization dependency loss is the transmission loss which the optical signal suffers, and differs depending on the polarization state of the optical signal. Each of the optical fiber and the repeating amplifier which are employed in the transmission path is designed normally in such a way that the polarization dependency loss is reduced as much as possible. However, the polarization dependency loss is, while a very small amount, contained in particular in the devices which are employed in the repeating amplifier. When the optical signal passes through the portion of the transmission path which has the polarization dependency loss, the optical signal is in the polarization state in which the polarization of the optical signal coincides with the polarization axis having the smaller loss, then there is no problem. On the other hand, if the optical signal is in the polarization state in which the polarization of the optical signal coincides with the polarization axis having the larger loss, then the optical signal component is excessively attenuated so that noise light having the opposite polarization state is increased in level. As a result, the signal-to-noise ratio is, while a very small amount, degraded.

Even if the degradation of every signal-to-noise ratio is small, in the ultra-long distance transmission system in which several hundreds of the repeating amplifiers are connected in series with one another (the transmission distance is about 10,000 km), the accumulation of this effect can not be neglected. In addition, since this effect is the polarization dependency effect, when the polarization state fluctuates, then the effect thereof also changes, and as a result, the transmission characteristics (for example, the bit error rate after transmission) also fluctuate with time. Since the system design should be made with the worst state taken into consideration, such fluctuations of the transmission characteristics are not preferable.

In general, the conventional polarization modulator has the polarization dependency effect, and has the birefringence characteristic as one of them therein. In particular, since the LN waveguide has a relatively large birefringence, the propagation speed of light differs between the two polarization axes. For this reason, a delay difference occurs between the light beams passing through the two polarization axes, respectively, and it results in the polarization dispersion. As a result, the optical signal passing through the polarization modulator is produced by superposing the two optical signals which are shifted on the time base by the delay difference, which degrades the transmission characteristics.

As described above, there arises a problem, associated with the conventional polarization modulator, that the transmission characteristics are degraded by the polarization dispersion which the conventional polarization modulator itself has.

### SUMMARY OF THE INVENTION

According to one aspect of the present invention, there is provided an optical transmitter for modulating the polarization of an optical signal supplied through an input terminal, the optical transmitter including: a polarization modulator; and at least one birefringence device which is connected to at least one of the preceding stage or the following stage of the polarization modulator in such a way that the fast axis and slow axis thereof are aligned with the slow axis and the fast axis of the polarization modulator, and in which the total amount of polarization dispersion is substantially equal to or compensates at least in part for the amount of polarization dispersion of the polarization modulator.

According to another aspect of the present invention, there is provided an optical transmission system for transmitting an optical signal, the system including: the above-mentioned optical transmitter according to the above aspect; an optical transmission path to which an optical signal which has been outputted from the optical transmitter is inputted; and an optical receiver for receiving the optical signal outputted through the optical transmission path.

The birefringence device which has the polarization dispersion amount corresponding to the polarization dispersion amount of the polarization modulator is connected to the polarization modulator, whereby it is possible to cancel out the polarization dispersion amount which is applied by the polarization modulation. The polarization dispersion of the polarization modulator which occupies the large ratio in the total polarization dispersion in the transmission system is removed, whereby the better transmission characteristics can be expected. BRIEF DESCRIPTION OF THE DRAWINGS

The above and other objects, features and advantages of the present invention will become more apparent from the following detailed description when taken in conjunction with the accompanying drawings, wherein:
Fig. 1 is a schematic view useful in explaining the influence which is exerted on an optical signal by the polarization dispersion when the optical signal is passing through a birefringence device;
Fig. 2 is a schematic view useful in explaining the influence which is exerted on an optical signal by the polarization dispersion when the optical signal is passing through a polarization modulator;
Fig. 3 is a block diagram showing a configuration of an optical transmitter according to the prior art;
Fig. 4 is a schematic view showing a construction of a polarization modulator which is used in an optical transmission apparatus according to Embodiment 1 of the present invention;
Fig. 5 is a schematic view showing another construction of a polarization modulator which is used in an optical transmission apparatus according to Embodiment 1 of the present invention;
Fig. 6 is a schematic view showing a construction of a polarization modulator which is used in an optical transmission apparatus according to Embodiment 2 of the present invention;
Fig. 7 is a schematic view showing another construction of a polarization modulator which is used in an optical transmission apparatus according to Embodiment 2 of the present invention; and
Fig. 8 is a block diagram showing a construction of an optical transmission system according to the present invention.

### DETAILED DESCRIPTION OF THE PREFERRED EMBODIMENTS

First of all, a conventional optical transmitter will hereinafter be described before describing an optical transmitter according to the present invention in order to make easy the understanding of the present invention.

As described above, in general, the polarization modulator which is used in the optical transmitter has the birefringence. In particular, the lithium niobate (LN) waveguide has the relatively large birefringence. The delay difference occurs between the light beams which pass through the two polarization axes perpendicularly intersecting each other, respectively, due to the presence of the birefringence, and it becomes the polarization dispersion.

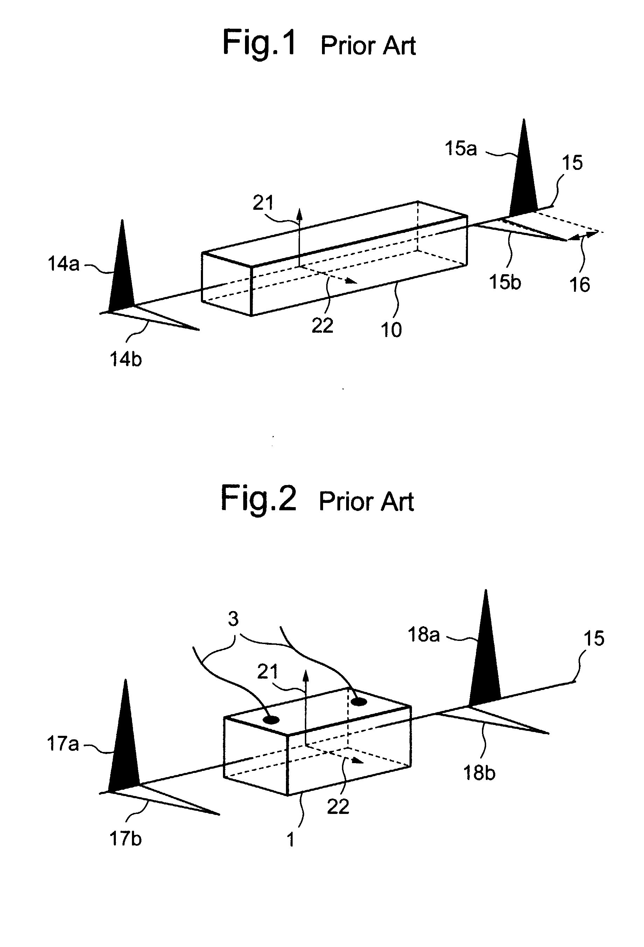

Figs. 1 and 2 are respectively schematic views each useful in explaining the influence which is exerted on an optical signal by the polarization dispersion when the optical signal is passing through a device having the birefringence. As shown in Fig. 1, after an optical signal in the polarization state having a predetermined angle has passed the above-mentioned device 10, specific cross polarization components 14a and 14b of the device become outputs 15a and 15b, respectively, which have a delay difference 16 on the time axis.

Fig. 2 is a schematic view showing an example of commercially available LN polarization modulator and which has signal supply lines 3 for the polarization modulation. Normally, the LN polarization modulator has the polarization dispersion of about 15 ps or so between two polarization axes 21 and 22. As a result, in the LN polarization modulator, the output optical signal is produced by superposing the two optical signals which are shifted on the time base by about 15 ps. When the transmission rate is 10 Gb/s, since the time width which is occupied by one signal bit is only at most 100 ps, the polarization dispersion of about 15 ps results in the degradation of the transmission characteristics.

In addition, with respect to the polarization dependency loss, each of the optical fiber and the repeating amplifier which are employed in the transmission path is designed in such a way that the polarization dependency loss therein is reduced as much as possible. However, in particular, the polarization dependency loss is, while a very small amount, contained in each of the devices which are employed in the repeating amplifier. For the optical signal passing through the portion of the transmission path which has the polarization dependency loss, when the optical signal passes therethrough in the polarization state in which the polarization of the optical signal coincides with the polarization axis having the less loss, then there is no problem. On the other hand, when the optical signal passes therethrough in the polarization state in which the polarization of the optical signal coincides with the polarization axis having the large loss, then the optical signal component is excessively reduced in level and hence the noise light having the opposite polarization state is relatively increased in level to degrade the signal-to-noise ratio.

Even when the degradation of every signal-to-noise ratio is small, in the ultra-long distance transmission system in which several hundreds of repeating amplifiers are connected in series with one another (the transmission distance is about 10,000 km), the accumulation of this effect can not be neglected. In addition, since this effect is the polarization dependency effect, when the polarization state fluctuates, then the effect thereof also changes, and as a result, the transmission characteristics (for example, the bit error rate after transmission) also fluctuates with time. Since the system design should be carried out with the worst state taken into consideration, such fluctuations of the transmission characteristics are not preferable.

As one of the technologies for suppressing any of the fluctuations in the transmission characteristics due to the polarization dependency loss and the like, there is known the method of scrambling the polarization state of the optical signal at a time point of the transmission thereof. In particular, the method is most effective wherein the scrambling is carried out with the sine wave having the bit rate frequency of the optical signal. This technology is disclosed in Japanese Patent Application Laid-open No. Hei 8-111662.

Also, the wavelength-division multiplexed transmission system wherein the polarization scrambling technology is utilized in the channels and then the interaction between the channels is reduced is disclosed in Japanese Patent Application Laid-open No. Hei 8-237225.

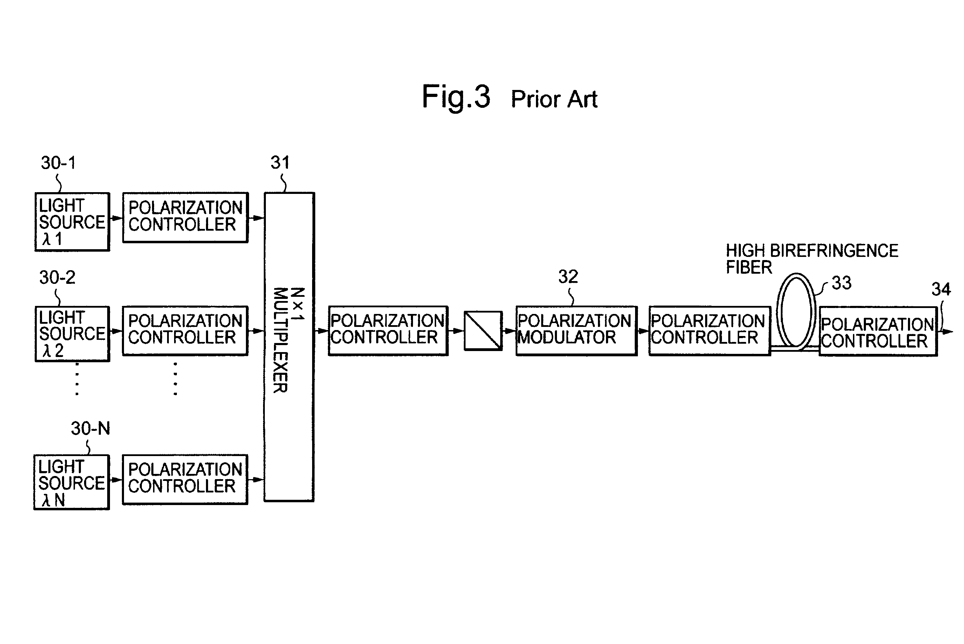

Fig. 3 is a block diagram showing a configuration of the wavelength-division multiplexed transmission system disclosed in Japanese Patent Application Laid-open No. Hei 8-237225. Optical signals emitted from a plurality of light sources 30-1 to 30-N and which have the different wavelengths are wavelength-multiplexed by respective polarization controllers and an N x 1 multiplexer 31. The optical signal which has been obtained through the wavelength multiplexing is subjected to the polarization modulation by a polarization modulator 32. The output optical signal from the polarization modulator 32 is set by a high birefringence fiber 33 in such a way that the polarization states of the wavelengths of the adjacent channels perpendicularly intersect each other. In the polarization modulation in this wavelength multiplexing system, in order to reduce the non-linear interaction between the multiplexed channels, the polarization dispersion is intentionally added to the wavelength-multiplexed signal. In such a way, the polarization states between the adjacent channels are made perpendicularly intersect each other. For example, when the channel interval is made 100 GHz, this state can be realized by adding the polarization dispersion of about 5 ps to the wavelength-multiplexed signal. For this purpose, the birefringence device is inserted into the position after the polarization modulator 32.

In general, the conventional polarization modulator has the polarization dependency effect, and has the birefringence characteristic as one of them therein. In particular, since the LN waveguide has the relatively large birefringence, the propagation speed of light differs between the two polarization axes. For this reason, the delay difference occurs between the light beams passing through the two polarization axes, respectively, and it becomes the polarization dispersion. As a result, the optical signal passing through the polarization modulator is produced by superposing the two optical signals which are shifted on the time base by the delay difference, which degrades the transmission characteristics.

On the other hand, in the configuration of the optical transmitter described in Japanese Patent Application Laid-open No. Hei 8-111662, in the case where the polarization modulator has the polarization dispersion, it is impossible to avoid the effect associated therewith. In addition, in the polarization modulation described in Japanese Patent Application Laid-open No. Hei 8-237225, the birefringence optical fiber is inserted into the position after the polarization modulator. However, this configuration makes the polarization states between the adjacent channels perpendicularly intersect each other to reduce the interaction between the channels. Hence, the polarization dispersion amount resulting therefrom is different from the polarization dispersion amount which is suitable for suppressing the degradation, of the transmission characteristics, which is caused by the polarization dispersion. The excessive addition of the polarization dispersion to the optical signal results in the degradation of the transmission quality, and in particular, this effect is increased as the bit rate is further increased. Therefore, in improving the bit rate, it is required to take the measures of reducing any of the influences which are exerted on the optical signal of the polarization dispersion contained in the polarization modulator.

### Embodiment 1

Next, the preferred embodiments of the present invention will hereinafter be described in detail with reference to the accompanying drawings. First of all, the description will hereinbelow be given with respect to an optical transmitter according to Embodiment 1 of the present invention.

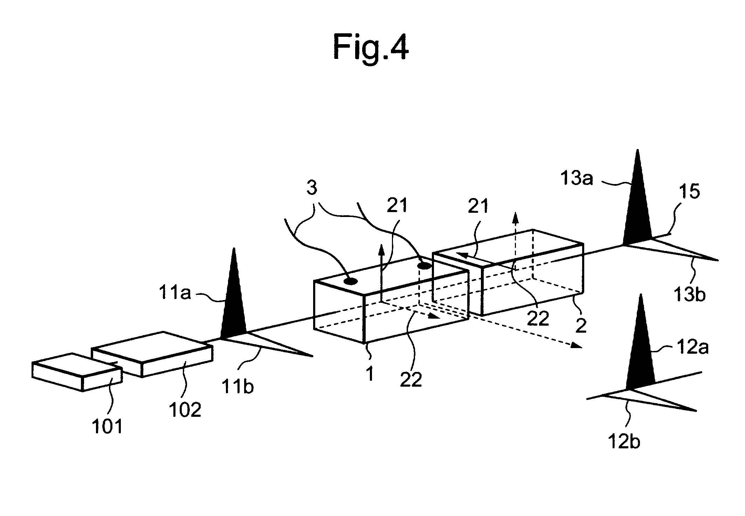

Fig. 4 is a schematic view showing a construction of the optical transmitter according to the present embodiment. The optical transmitter of the present embodiment includes: a light source 101; an intensity modulator 102 for subjecting an optical signal which has been emitted from the light source 101 on the basis of the transmission data to the intensity modulation; and a polarization modulator 22 for polarization-modulating the optical signal outputted from the intensity modulator.The polarization modulator 22 includes a waveguide 1 for the polarization modulation and a birefringence device 2 for compensating for the polarization dispersion which device is provided on the output side of the waveguide 1 for the polarization modulation.

The optical signal (the input optical signal) which has been outputted from the intensity modulator 102 has both of a component (a fast axis component) 11a of a polarization axis 21 having the relatively large propagation speed in the waveguide 1 for the polarization modulation and a component (a slow axis component) 11b of a polarization axis 22 having the relatively small propagation speed therein. The input optical signal is inputted to the waveguide 1 for the polarization modulation so as to fulfill the above-mentioned relationship between the polarization axes.

The optical signal which has been outputted from the waveguide 1 for the polarization modulation is then inputted to the birefringence device for compensating for the polarization dispersion. Both of the fast axis component lla of the waveguide for the polarization modulation in the input optical signal and the slow axis component 11b of the waveguide for the polarization modulation in the input optical signal suffer the polarization dispersion in the waveguide 1 for the polarization modulation to become a fast axis component 12a of the waveguide for the polarization modulation in the output optical signal from the waveguide for the polarization modulation and a slow axis component 12b of the waveguide for the polarization modulation in the output optical signal from the waveguide for the polarization modulation, respectively. This optical signal suffers the polarization dispersion in the opposite direction in the birefringence device 2 for compensating for the polarization dispersion. In other words, since there is obtained the polarization dispersion amount which is identical to the polarization dispersion amount in the waveguide 1 for the polarization modulation and which is opposite in direction to the polarization dispersion amount in the waveguide 1 for the polarization modulation, the output optical signal from the birefringence device 2 for compensating for the polarization dispersion has a fast axis component 13a of the waveguide for the polarization modulation in the output optical signal and a slow axis component 13b of the waveguide for the polarization modulation in the output optical signal, so that it is possible to substantially exclude the degradation of the transmission characteristics due to the influences of the polarization dispersion.

More specifically, in the present embodiment, the LN waveguide having the polarization dispersion is employed as the waveguide 1 for the polarization modulation, and also the birefringence device having the desired polarization dispersion is inserted into the position right after the LN waveguide, whereby it is possible to construct the optical transmitter which is capable of excluding any of the influences of the polarization dispersion. For example, as the large speed polarization modulator which is capable of carrying out the polarization modulation of the sine wave having the bit rate frequency for the optical signal which has suffered the large speed intensity modulation at the bit rate of equal to or larger than 2.5 Gb/s, the phase modulator employing the LN waveguide can be used. In order that the phase modulator may be utilized as the polarization modulator, first of all, the optical signal is made incident in such a way that the optical signal is wave-guided equally to the two polarization axes of the phase modulator. Then, if the electrical signal which is used to carry out the modulation is applied, then the two light beams are subjected to the phase modulation having the different depths due to the difference in the electro-optic coefficient between the two polarization axes of the LN waveguide, so that the polarization state is changed.

In addition, as for the birefringence device, the LN waveguide which is identical in kind and length to the LN waveguide which is employed in the modulation portion is known as such a device which can be most simply prepared. In this case, the polarization axis (the fast axis) 21, which has the relatively large propagation speed, of the LN waveguide of the modulation portion is coupled to the slow polarization axis (the slow axis) 22, which has the relatively slow propagation speed, of the LN waveguide for compensating for the polarization dispersion, while the slow axis 22 of the LN waveguide of the modulation portion is coupled to the fast axis 21 of the LN waveguide for compensating for the polarization dispersion. More specifically, both of the associated axes are connected to each other at the position where they are twisted by 90 degrees.

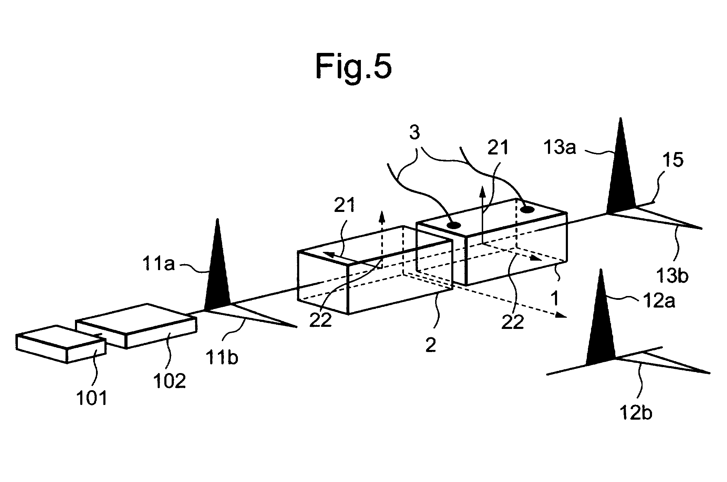

In the optical transmitter shown in Fig. 4, the waveguide for compensating for the polarization dispersion is connected to the position after the waveguide of the modulation portion. However, alternatively, as shown in Fig. 5, instead of this configuration, the two constituent elements may be connected to each other by reversing the order of arrangement of them. In other words, in the waveguide for compensating for the polarization dispersion, the polarization dispersion which is in the opposite direction to that of the polarization dispersion occurring in the waveguide for the polarization modulation is previously, intentionally applied to the input optical signal. As a result, the polarization dispersion in the waveguide for the polarization modulation in the after stage is cancelled out to reduce the degradation of the transmission characteristics due to the influences of the polarization dispersion.

### Embodiment 2

Next, the description will hereinbelow be given with respect to an optical transmitter according to Embodiment 2 of the present invention.

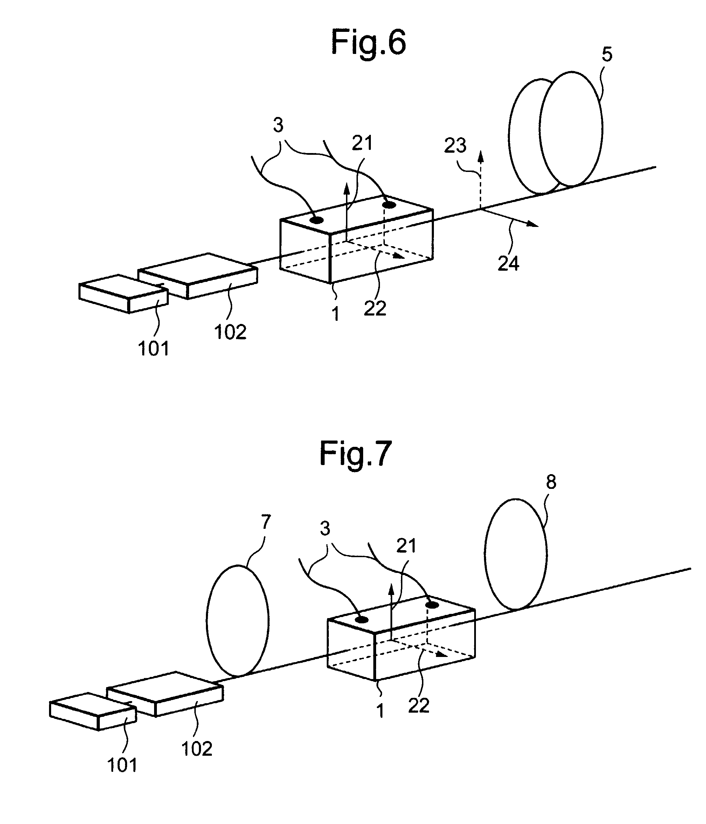

Fig. 6 is a schematic view showing a construction of the optical transmitter according to the present embodiment. In this connection, the constituent elements which are the same as those shown in Fig. 4 are designated by the same reference numerals. In Embodiment 1, there has been described the specific case where the LN waveguide which is employed in the modulation portion is utilized as the device for compensating for the polarization dispersion. On the other hand, in Embodiment 2, a polarization maintaining optical fiber 5 is used as the device for compensating for the polarization dispersion.

The polarization maintaining optical fiber is an optical fiber which is designed in such a way that the desired stress is intentionally applied between the two polarization axes of the optical fiber to produce the difference in the propagation speed of light, thereby preventing the two polarization components from being coupled to each other. This polarization maintaining optical fiber can be used as the birefringence device by making light equally incident to the two polarization axes. The difference in the propagation speed of light between the two polarization axes of the present polarization maintaining optical fiber is about on the order of 10⁻⁴, and hence the delay difference of 15 ps for example can be made possible on the basis of the propagation of 150,000 ps (corresponding to 30 m in length).

The polarization maintaining optical fiber 5 is connected to the output side of the LN waveguide 1 for the modulation. At this time, similarly to the above-mentioned Embodiment 1, the LN waveguide 1 and the polarization maintaining optical fiber 5 are connected to each other in such a way that the fast axis of the LN waveguide 1 is coupled to the slow axis of the polarization maintaining optical fiber 5, while the slow axis of the LN waveguide 1 is coupled to the fast axis of the polarization maintaining optical fiber 5. With respect to the adjustment of the length of the polarization maintaining optical fiber 5, the length thereof is set in such a way that the polarization dispersion amount which the polarization maintaining optical fiber 5 has is equal to the polarization dispersion amount which the LN waveguide 1 has, thereby preventing the degradation of the transmission characteristics due to the polarization dispersion.

In the optical transmitter shown in Fig. 6, the polarization maintaining optical fiber 5 for compensating for the polarization dispersion is connected to the output side of the waveguide 1 of the modulation portion. However, alternatively, instead of this construction, similarly to the case described with reference to Fig. 5, another construction may also be adopted in which the polarization maintaining optical fiber 5 for compensating for the polarization dispersion is provided on the input side of the waveguide 1 by reversing the order of the arrangement thereof.

In addition, as shown in Fig. 7, the optical transmitter of the present embodiment may also be constructed in such a way that the polarization maintaining optical fiber is divided into two portions, i.e., a polarization maintaining optical fibers 7 and 8 which are arranged on both of the sides, i.e., in the preceding stage and the following stage of the LN waveguide 1. In this case, it should be noted that the total sum of the polarization dispersion amounts of the polarization maintaining optical fibers 7 and 8 is made equal to the polarization dispersion amount of the LN waveguide 1. In this connection, in Fig. 7, the constituent elements which are the same as those shown in Fig. 6 are designated by the same reference numerals.

In the optical transmitter as described above, the superposing of the transmission signals is carried out utilizing the intensity modulation. However, alternatively, the phase modulation may also be adopted instead of the intensity modulation. In this case, in the above-mentioned embodiments and the figures associated therewith, the intensity modulator has only to be replaced with the phase modulator.

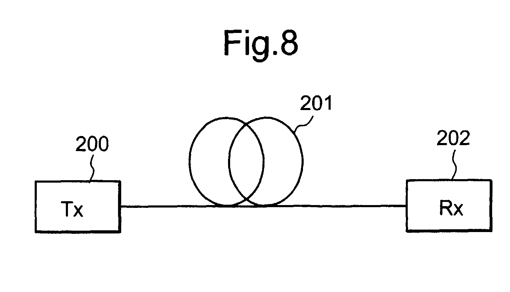

In addition, the optical transmission system shown in Fig. 8 can be constructed by connecting the above-mentioned optical transmitter 200, optical transmission path 201 and optical receiver 202 to one another.

As set forth hereinabove, according to a polarization modulator of the present system, it is possible to compensate for the polarization dispersion which degrades the transmission characteristics which the conventional polarization modulator essentially has. For this reason, it is possible to prevent the degradation of the transmission characteristics by applying the present polarization modulator to the optical transmitter.

In addition, the polarization modulator of the present system is used in the optical transmitter and also the polarization scrambling is carried out, whereby it is possible to realize the optical transmitter which is capable of suppressing any of the influences of the polarization dependency loss, the polarization hole burning and the polarization dispersion of the polarization dependency effect which degrades the transmission characteristics.

In addition, by using the polarization maintaining optical fiber as the birefringence device, not only the mounting thereof becomes easy, but also it is possible to realize the optical transmitter which can be readily connected to other devices and which is low in the connection loss and also which is inexpensive.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the scope of the following claims.

## Claims

1. An optical transmitter for modulating the polarization of an optical signal supplied through an input terminal, said optical transmitter comprising:
a polarization modulator (1);
characterized by:
at least one birefringence device (2; 5; 7,8; 201) which is connected to at least one of the preceding stage or the following stage of said polarization modulator (1) in such a way that the fast axis and slow axis thereof are aligned with the slow axis and the fast axis of said polarization modulator, respectively, and in which the total amount of polarization dispersion compensates at least in part for the amount of polarization dispersion of said polarization modulator.

2. The optical transmitter according to claim 1, wherein each of said at least one birefringence device (2) is made of a material which is of the same kind as that of a material of which said polarization modulator is made.

3. The optical transmitter according to claim 1, wherein each of said at least one birefringence device is provided with a polarization maintaining optical fiber (5; 7,8; 201).

4. The optical transmitter according to claim 1, further comprising an intensity modulator (102) which is arranged between said input terminal and an input portion of said polarization modulator.

5. The optical transmitter according to claim 1, further comprising a phase modulator which is arranged between said input terminal and an input portion of said polarization modulator.

6. The optical transmitter according to claim 4, further comprising a light source (101) for supplying the optical signal to said input terminal.

7. The optical transmitter according to claim 5, further comprising a light source (101) for supplying the optical signal to said input terminal.

8. The optical transmitter according to claim 4, wherein said polarization modulator (1) is driven on the basis of a signal having the same bit rate as that of a modulation signal which is applied to said intensity modulator (102).

9. The optical transmitter according to claim 1, wherein said polarization modulator (1) includes a phase modulator, and an optical signal is made incident so as to be equally divided to two polarization axes of said phase modulator, and the incident optical signals corresponding to said two polarization axes are separately modulated.

10. The optical transmitter according to claim 1, wherein said polarization modulator (1) is made of lithium niobate.

11. The optical transmitter according to claim 10, wherein said birefringence device (2) is made of lithium niobate.

12. An optical transmission system for transmitting an optical signal, said system comprising:
an optical transmitter (200) as defined in claim 1;
an optical transmission path to which an output optical signal is inputted from said optical transmitter; and
an optical receiver (202) for receiving an optical signal which has been outputted through said optical transmission path.
